# EUROPÄISCHE PATENTANMELDUNG

(11) **EP 4 159 332 A1**
(43) Veröffentlichungstag der Anmeldung: **05.04.2023**
(21) Anmeldenummer: 22198083.2
(22) Anmeldetag: 27.09.2022
(51) Int. Cl.: B08B 13/00, G01M 99/00, B08B 3/02

(54) **PRÜFKÖRPER ZUM PRÜFEN EINER WASCHLEISTUNG EINER INDUSTRIELLEN WASCHMASCHINE**

(30) Priorität: 29.09.2021 DE 102021210880
(71) Anmelder: ZF Friedrichshafen AG, 88046 Friedrichshafen (DE)
(72) Erfinder: SCHIELE, Philip, 66131 Saarbrücken (DE); IGEL, Anton, 66126 Saarbruecken (DE); BONCOURT, Marcel, 66346 Püttlingen (DE); KRIER, Daniel, 66773 Schwalbach (DE)

(57) **Zusammenfassung**

Prüfkörper (10) zum Prüfen einer Waschleistung einer industriellen Waschmaschine, umfassend ein erstes Seitenelement (11) mit mindestens einer ersten planen Oberfläche (21) sowie ein zweites Seitenelement (12) mit mindestens einer zweiten planen Oberfläche (22), wobei das erste Seitenelement (11) mit dem zweiten Seitenelement (12) verbindbar ist, so dass die erste plane Oberfläche (21) an der zweiten planen Oberfläche (22) anliegt, wobei die erste plane Oberfläche (21) erste Bohrungen (31) aufweist und wobei die zweite plane Oberfläche (22) zweite Bohrungen (32) aufweist. Der erfindungsgemäße Prüfkörper (10) zeichnet sich dadurch aus, dass die ersten Bohrungen (31) in einem verbundenen Zustand des ersten Seitenelements (11) mit dem zweiten Seitenelement (12) in axialer Verlängerung der zweiten Bohrungen (32) angeordnet sind und dass zwischen die erste plane Oberfläche (21) und die zweite plane Oberfläche (22) eine plastisch verformbare Folie (40) eingelegt ist.

## Beschreibung

Die Erfindung betrifft einen Prüfkörper zum Prüfen einer Waschleistung einer industriellen Waschmaschine gemäß dem Oberbegriff von Anspruch 1.

Im Stand der Technik sind industrielle Waschanlagen bekannt, welche oftmals eine Einzugsstation, eine industrielle Waschmaschine, ggf. eine Trocknungsstation sowie eine Auslassstation umfassen. Zu waschende Werkstücke werden z.B. über die Einzugsstation eingezogen, dann über ein Förderband der Waschmaschine zugeführt und dort gewaschen. Über ein weiteres Förderband werden die gewaschenen Werkstücke wieder aus der Waschmaschine herausgefördert und ggf. zu einer Trocknungsstation gefördert und dort mittels Heißluft getrocknet. Zuletzt werden die Werkstücke zur Auslassstation gefördert und dort entnommen.

Beispielsweise aus der US 4 327 756 A ist eine industrielle Waschmaschine bekannt, die das Waschen von Werkstücken in einem derartigen, kontinuierlichen Prozess ermöglicht.

Aus der DE 000069615391 T2 ist eine industrielle Waschmaschine mit mindestens einer Waschkammer zum Waschen von Werkstücken bekannt, wobei die Waschkammer zwischen einem ersten Förderer und einem zweiten Förderer angeordnet ist. Ein Einspritzorgan spritzt Waschflüssigkeit in die Waschkammer.

Die bekannten industriellen Waschmaschinen sind jedoch dahingehend nachteilbehaftet, als dass es bisher keine zuverlässige Möglichkeit gibt, die Reinigungsleistung der industriellen Waschmaschinen im Betrieb zuverlässig und objektiv zu überprüfen.

Es ist eine Aufgabe der vorliegenden Erfindung, einen verbesserten Prüfkörper zum Prüfen einer Waschleistung einer industriellen Waschmaschine vorzuschlagen.

Diese Aufgabe wird erfindungsgemäß durch den Prüfkörper zum Prüfen einer Waschleistung einer industriellen Waschmaschine gemäß Anspruch 1 gelöst.

Vorteilhafte Ausgestaltungen und Weiterbildungen der Erfindung gehen aus den abhängigen Ansprüchen hervor.

Die Erfindung betrifft einen Prüfkörper zum Prüfen einer Waschleistung einer industriellen Waschmaschine, umfassend ein erstes Seitenelement mit mindestens einer ersten planen Oberfläche sowie ein zweites Seitenelement mit mindestens einer zweiten planen Oberfläche, wobei das erste Seitenelement mit dem zweiten Seitenelement verbindbar ist, so dass die erste plane Oberfläche an der zweiten planen Oberfläche anliegt, wobei die erste plane Oberfläche erste Bohrungen aufweist und wobei die zweite plane Oberfläche zweite Bohrungen aufweist. Der erfindungsgemäße Prüfkörper zeichnet sich dadurch aus, dass die ersten Bohrungen in einem verbundenen Zustand des ersten Seitenelements mit dem zweiten Seitenelement in axialer Verlängerung der zweiten Bohrungen angeordnet sind und dass zwischen die erste plane Oberfläche und die zweite plane Oberfläche eine plastisch verformbare Folie eingelegt ist.

Die Erfindung beschreibt also einen Prüfkörper, der dazu geeignet ist, die Waschleistung einer industriellen Waschmaschine zu prüfen. Unter einer industriellen Waschmaschine wird dabei eine Waschmaschine verstanden, welche Werkstücke, insbesondere metallische Werkstücke, nach einem Zwischenbearbeitungsschritt oder nach einem finalen Bearbeitungsschritt reinigt. Die Werkstücke werden dabei u.a. von noch anhaftendem Schneidöl bzw. noch anhaftenden Spänen aus dem Bearbeitungsvorgang gereinigt.

Bevorzugt ist die industrielle Waschmaschine Teil einer Waschanlage, welche neben der eigentlichen Waschmaschine auch eine Werkstückaufnahmestation, eine Werkstückausgabestation sowie eine Werkstücktrocknungsstation umfasst, wobei die einzelnen Stationen vorteilhaft durch Förderbänder miteinander verbunden sind, so dass die Werkstücke die Waschanlage und den durchgeführten Waschprozess automatisiert durchlaufen, nachdem sie der Werkstückaufnahmestation zugeführt wurden. Beispielsweise können die Werkstücke nach Durchlaufen einer Station durch einen Robotergreifer auf einem Förderband abgelegt werden und bei Erreichen einer weiteren Station durch einen weiteren Robotergreifer wieder aufgenommen werden.

Besonders bevorzugt umfasst die Waschanlage zwei unterschiedliche industrielle Waschmaschinen, wovon eine erste Waschmaschine eine Niederdruckwaschmaschine ist, welche die Werkstücke bei einem Druck von unter 10 bar reinigt, und eine zweite Waschmaschine eine Hochdruckwaschmaschine ist, welche die Werkstücke bei einem Druck von 200 bar bis 600 bar reinigt. Der erfindungsgemäße Prüfkörper eignet sich zum Prüfen der Waschleistung insbesondere einer Hochdruckwaschmaschine, kann im Prinzip aber ebenso zum Prüfen der Waschleistung einer Niederdruckwaschmaschine verwendet werden. Weiterhin umfasst die Waschanlage bevorzugt eine Werkstückspülstation, bei welcher auf den Werkstücken vom Waschvorgang verbliebenes Reinigungsmittel abgespült wird sowie eine erste Werkstücktrocknungsstation, welche z.B. über Erzeugung eines Unterdrucks bzw. eines Vakuums eine Trockenwirkung erzeugt, sowie eine zweite Werkstücktrocknungsstation, welche z.B. über Heißluft eine Trockenwirkung erzeugt. Alle Stationen sind vorteilhaft durch Förderbänder oder ähnliche Fördermittel verbunden.

Der Prüfkörper besteht aus zwei aneinander anlegbaren Seitenelementen, wobei jedes der Seitenelemente eine plane Oberfläche aufweist. Im verbundenen Zustand der Seitenelemente liegen die planen Oberflächen aneinander an und die Seitenelemente definieren gemeinsam die Außengeometrie des Prüfkörpers. Im nicht verbundenen Zustand ist der Prüfkörper entsprechend in seine Einzelteile, also u.a. die mindestens zwei Seitenelemente, zerlegt.

Sowohl die erste plane Oberfläche als auch die zweite plane Oberfläche weisen jeweils eine Reihe von Bohrungen auf. Bevorzugt weisen sämtliche Bohrungen einen identischen Durchmesser auf. Die Bohrungen tauchen bevorzugt jeweils senkrecht in die erste plane Oberfläche bzw. in die zweite plane Oberfläche ein.

Erfindungsgemäß ist es nun vorgesehen, dass die ersten Bohrungen in einem verbundenen Zustand des ersten Seitenelements mit dem zweiten Seitenelement in axialer Verlängerung der zweiten Bohrungen angeordnet sind. Das bedeutet also, dass die ersten Bohrungen und die zweiten Bohrungen derart angeordnet sind, dass jeweils eine erste Bohrung in axialer Verlängerung einer zweiten Bohrung liegt und umgekehrt, wenn das erste Seitenelement mit dem zweiten Seitenelement verbunden ist.

Weiterhin ist es erfindungsgemäß vorgesehen, dass zwischen die erste plane Oberfläche und die zweite plane Oberfläche im verbundenen Zustand des ersten Seitenelements mit dem zweiten Seitenelement eine plastisch verformbare Folie eingelegt ist.

Der Prüfkörper kann dann vorteilhaft wie ein zu waschendes Werkstück in die Waschanlage eingeschleust werden und den gesamten Waschprozess einschließlich des Trocknens durchlaufen oder gezielt in die zu prüfende Waschmaschine eingeschleust werden. Der Waschbetrieb der Waschmaschine muss zum Prüfen der Waschleistung mittels des erfindungsgemäßen Prüfkörpers vorteilhaft nicht unterbrochen werden. In der Waschmaschine wird der Prüfkörper im Rahmen des Waschvorgangs aus dazu ausgebildeten Düsen der Waschmaschine mit Wasserstrahlen bestrahlt, welche von einer Außenseite des Prüfkörpers in die ersten bzw. die zweiten Bohrungen eindringen und dann die zwischen der ersten Oberfläche und der zweiten Oberfläche eingespannte Folie mit Wasserdruck beaufschlagen. Je nach Druckbeaufschlagung und Eigenschaften der Folie kann nun eine plastische Verformung aufgrund des Wasserdrucks in die Wirkrichtung des Wasserdrucks an der Folie entstehen, wobei die Folie erfindungsgemäß stets derart an den Soll-Wasserdruck angepasst ausgewählt wird, dass eine plastische Verformung eintritt, wenn der tatsächliche Wasserdruck dem zum Waschen gewünschten Wasserdruck entspricht.

Somit kann auf einfache Weise der zum Waschen in der Waschmaschine aus den Düsen austretende Wasserdruck qualifiziert werden. Da der Wasserdruck maßgeblich für die Waschleistung der Waschmaschine ist, kann entsprechend die Waschleistung der Waschmaschine auf einfache Weise geprüft werden.

Gemäß einer weiteren bevorzugten Ausführungsform der Erfindung ist es vorgesehen, dass die Folie als metallische Folie ausgebildet ist. Dies hat sich dahingehend als geeignet erwiesen, als dass Metalle selbst in Folienform einerseits stabil genug sind, um auch einem Wasserdruck von mehreren 100 bar standzuhalten, und andererseits, als dass Metalle das erforderliche Maß an plastischer Verformbarkeit ermöglichen.

Gemäß einer besonders bevorzugten Ausführungsform der Erfindung ist es vorgesehen, dass die Folie als Aluminiumfolie ausgebildet ist. Dies hat sich in praktischen versuchen als besonders gut geeignet erwiesen.

Insbesondere wird die Aluminiumfolie so ausgewählt, dass sie bei einem Wasserdruck von 450 bar eine Materialstärke von 0,2 mm aufweist.

Gemäß einer weiteren bevorzugten Ausführungsform der Erfindung ist es vorgesehen, dass die ersten Bohrungen teilweise als erste Durchgangsbohrungen und teilweise als erste Sackbohrungen ausgebildet sind und dass die zweiten Bohrungen teilweise als zweite Durchgangsbohrungen und teilweise als zweite Sackbohrungen ausgebildet sind.

Bevorzugt sind die ersten Bohrungen nebeneinander in Reihen angeordnet. Die Reihen sind bevorzugt übereinander angeordnet. Ebenso sind auch die zweiten Bohrungen bevorzugt nebeneinander in Reihen angeordnet, wobei auch hier die Reihen übereinander angeordnet sind.

Weiterhin bevorzugt sind die ersten Bohrungen abwechselnd als Durchgangsbohrungen und als Sackbohrungen ausgebildet, so dass in jeder Reihe stets eine Durchgangsbohrung zu zwei Sackbohrungen benachbart ist und umgekehrt. Die zweiten Bohrungen sind vorteilhaft auf die gleiche Weise angeordnet.

Gemäß einer besonders bevorzugten Ausführungsform der Erfindung ist es vorgesehen, dass die ersten Sackbohrungen in einem verbundenen Zustand des ersten Seitenelements mit dem zweiten Seitenelement in axialer Verlängerung der zweiten Durchgangsbohrungen angeordnet sind und dass die zweiten Sackbohrungen in einem verbundenen Zustand des ersten Seitenelements mit dem zweiten Seitenelement in axialer Verlängerung der ersten Durchgangsbohrungen angeordnet sind. Somit liegt also stets eine erste Durchgangsbohrung in axialer Verlängerung mit einer zweiten Sackbohrung. Ebenso liegt jede zweite Durchgangsbohrung in axialer Verlängerung mit einer ersten Sackbohrung.

Damit wird es vorteilhaft ermöglicht, dass in der Waschanlage der Prüfkörper entlang seiner gesamten Oberfläche - insbesondere von beiden Seiten - mit dem Wasserdruck aus der oder den Düsen beaufschlagt wird und der Wasserdruck dabei von außen in jede der ersten und zweiten Durchgangsbohrungen eindringt. Bevorzugt wird sogar jede der ersten und zweiten Durchgangsbohrungen gezielt angestrahlt, insbesondere für eine definierte Zeitdauer, beispielsweise 0,5 s. Da den ersten bzw. zweiten Durchgangsbohrungen in axialer Verlängerung stets eine erste bzw. zweite Sackbohrung folgt, hat die zwischen der ersten und er zweiten Oberfläche eingelegte Folie räumlichen Spielraum, um sich aufgrund des Wasserdrucks in die jeweilige Sackbohrung hinein plastisch zu verformen. Die entstehende plastische Verformung ist dabei in der Regel im Wesentlichen halbkugelförmig. Nach dem Waschvorgang kann dann anhand einer Auswertung der plastischen Verformungen der Folie sowie einer Zuordnung der Verformungen zu einer bestimmten Düse der Waschmaschine erkannt werden, ob ggf. eine oder mehrere Düsen der Waschmaschine eine ungenügende Waschleistung erbringen. Eine mögliche Ursache kann beispielsweise eine verstopfte Düse sein oder auch eine undichte Druckzuleitung.

Gemäß einer weiteren bevorzugten Ausführungsform der Erfindung ist es vorgesehen, dass eine äußere Geometrie des Prüfkörpers einer äußeren Geometrie eines von der Waschmaschine zu waschenden Werkstücks identisch entspricht. Dadurch kann die Waschleistung besonders zuverlässig und nah an den tatsächlich zu waschenden Werkstücken geprüft werden. Insbesondere kann der Prüfkörper wie ein zu waschendes Werkstück und gemeinsam mit einem oder mehreren zu waschenden Werkstücken in die Waschmaschine bzw. die Waschanlage eingeschleust werden.

Gemäß einer besonders bevorzugten Ausführungsform der Erfindung ist es vorgesehen, dass der Prüfkörper ein hydraulisches Schaltgerät eines Fahrzeuggetriebes nachbildet. Derartige Schaltgeräte sind aufgrund ihrer Vielzahl von Bohrungen vergleichsweise aufwändig zu reinigen, jedoch müssen insbesondere alle Späne aus den Bohrungen zuverlässig entfernt werden, um eine spätere Beschädigung bzw. Blockade von Ventilen zu vermeiden. Das Prüfen der Waschleistung einer Waschmaschine für derartige Werkstücke ist daher wichtig, um stets eine ausreichende Waschleistung und damit Funktionsfähigkeit des Schaltgeräts garantieren zu können.

Im Gegensatz zu den Bohrungen des hydraulischen Schaltgeräts sind die Bohrungen des Prüfkörpers jedoch nicht labyrinthartig miteinander verbunden. Zum Prüfen der Waschleistung ist dies nämlich nicht erforderlich, wie sich herausgestellt hat. Stattdessen bildet der Prüfkörper das Schaltgerät nur in dessen äußerer Geometrie nach.

Gemäß einer weiteren bevorzugten Ausführungsform der Erfindung ist es vorgesehen, dass der Prüfkörper aus einem Metall besteht. Dies hat sich als gut geeignet herausgestellt, da Metalle robust sind und zudem auch die zu waschenden Werkstücke in der Regel aus einem Metall gefertigt sind.

Gemäß einer besonders bevorzugten Ausführungsform der Erfindung ist es vorgesehen, dass der Prüfkörper aus Aluminium besteht. Da auch die zu waschenden Schaltgeräte in der Regel aus Aluminium bestehen, ergibt sich somit eine möglichst große Übereinstimmung in nahezu allen Eigenschaften zwischen dem Prüfkörper und dem Schaltgerät.

Gemäß einer weiteren bevorzugten Ausführungsform der Erfindung ist es vorgesehen, dass der Prüfkörper eine Vielzahl von Seitenelementen mit jeweils mindestens einer planen Oberfläche umfasst. Somit besteht der Prüfkörper also nicht nur aus zwei, sondern aus mehreren Seitenelementen, was eine Nachbildung auch komplexerer Werkstücke erlaubt. Die Seitenelemente weisen dabei allesamt Bohrungen wie das erste und das zweite Seitenelement auf und können miteinander verbunden werden, so dass die Bohrungen von stets zwei Seitenelementen zueinander in axialer Verlängerung angeordnet sind, in analoger Weise zu den ersten Bohrungen und den zweiten Bohrungen.

Gemäß einer besonders bevorzugten Ausführungsform der Erfindung ist es vorgesehen, dass zwischen je zwei aneinander anliegende plane Oberflächen eine Folie eingelegt ist. Da auch die weiteren Seitenelemente plane Oberflächen mit Bohrungen aufweisen, welche im verbundenen Zustand der Seitenelemente aneinander anliegen, kann auch hier eine Folie eingelegt werden. Somit kann die Waschleistung an allen möglichen Seiten und Stellen des Prüfkörpers geprüft werden.

Nachfolgend wird die Erfindung anhand von in den Figuren dargestellten Ausführungsformen beispielhaft erläutert.

Es zeigen:
- Fig. 1: beispielhaft eine mögliche Ausbildungsform eines erfindungsgemäßen Prüfkörpers zum Prüfen einer Waschleistung einer industriellen Waschmaschine,
- Fig. 2: beispielhaft das erste Seitenelement sowie die Folie des Prüfkörpers der Fig. 1 nach einem Waschvorgang,
- Fig. 3: beispielhaft eine weitere mögliche Ausbildungsform eines erfindungsgemäßen Prüfkörpers zum Prüfen einer Waschleistung einer industriellen Waschmaschine und
- Fig. 4: den Prüfkörper der Fig. 3 in einem Zustand, in dem alle drei Seitenelemente miteinander verbunden sind.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

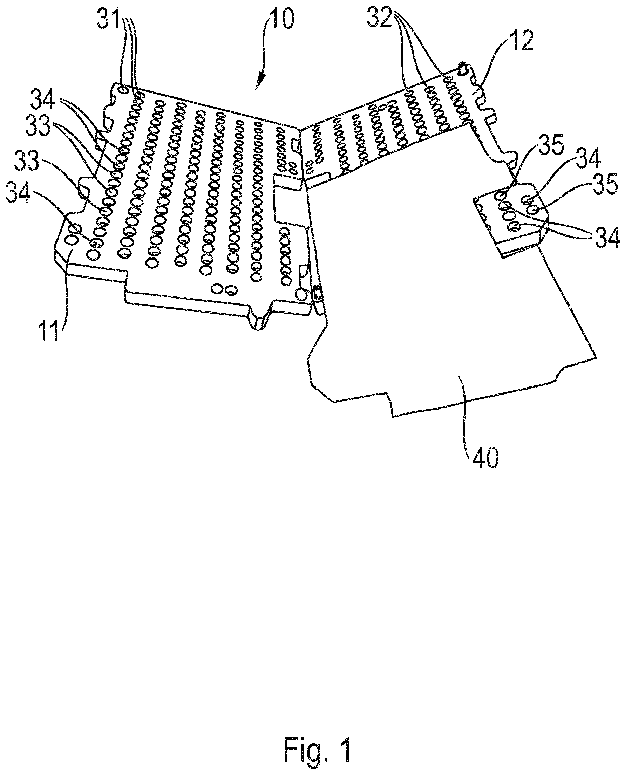

Fig. 1 zeigt beispielhaft eine mögliche Ausbildungsform eines erfindungsgemäßen Prüfkörpers 10 zum Prüfen einer Waschleistung einer industriellen Waschmaschine (nicht dargestellt in Fig. 1). Der Prüfkörper 10 besteht beispielsgemäß aus Aluminium und umfasst ein erstes Seitenelement 11 sowie ein zweites Seitenelement 12, welche in Fig. 1 nicht miteinander verbunden sind sondern lose nebeneinander angeordnet wurden. Wie zu sehen ist, weisen sowohl das erste Seitenelement 11 als auch das zweite Seitenelement 12 jeweils eine plane Oberfläche 21, 22 auf. Das erste Seitenelement 11 ist dabei mit dem zweiten Seitenelement 12 derart verbindbar, dass die erste plane Oberfläche 21 im verbundenen Zustand der Seitenelemente 11 und 12 an der zweiten planen Oberfläche 22 anliegt. Wie weiterhin zu ist, weist die erste plane Oberfläche 21 erste Bohrungen 31 auf. Genauso weist die zweite plane Oberfläche 22 zweite Bohrungen 32 auf. Die ersten Bohrungen 31 sind abwechselnd als erste Durchgangsbohrungen 33 und als erste Sackbohrungen 34 ausgebildet. Ebenso sind die zweiten Bohrungen abwechselnd als zweite Durchgangsbohrungen 35 und als zweite Sackbohrungen 36 ausgebildet. In einem verbundenen Zustand des ersten Seitenelements 11 mit dem zweiten Seitenelement 12 sind die ersten Sackbohrungen 34 in axialer Verlängerung der zweiten Durchgangsbohrungen 35 angeordnet und umgekehrt sind die zweiten Sackbohrungen 36 im verbundenen Zustand in axialer Verlängerung der ersten Durchgangsbohrungen 33 angeordnet. Weiterhin zu sehen ist eine plastisch verformbare Folie 40 aus Aluminium, welche zwischen die erste plane Oberfläche 21 und die zweite plane Oberfläche 22 eingelegt werden kann.

Die äußere Geometrie des Prüfkörpers 10 entspricht beispielsgemäß einem hydraulischen Schaltgerät eines Getriebes, zu dessen Reinigung die zu prüfende industrielle Waschmaschine vorgesehen ist. Indem die äußere Geometrie des Prüfkörpers 10 der äußeren Geometrie des Schaltgeräts entspricht, kann der Prüfkörper 10 wie ein Schaltgerät und ggf. sogar gemeinsam mit mehreren der Schaltgeräte in die Waschmaschine eingeschleust werden und dort einem Waschvorgang unterzogen werden. Während des Waschvorgangs wird der Prüfkörper 10 mit Wasser unter hohem Druck bestrahlt, insbesondere wird der Wasserdruck gezielt in die ersten und zweiten Durchgangsbohrungen 33, 35 geführt, so dass der Wasserdruck auch die Folie 40 innerhalb der ersten und zweiten Durchgangsbohrungen 33, 35 beaufschlagt und dort nach Maßgabe des Wasserdrucks eine plastische Verformung der Folie 40 im Bereich der jeweiligen Durchgangsbohrung 33, 35 bewirken kann.

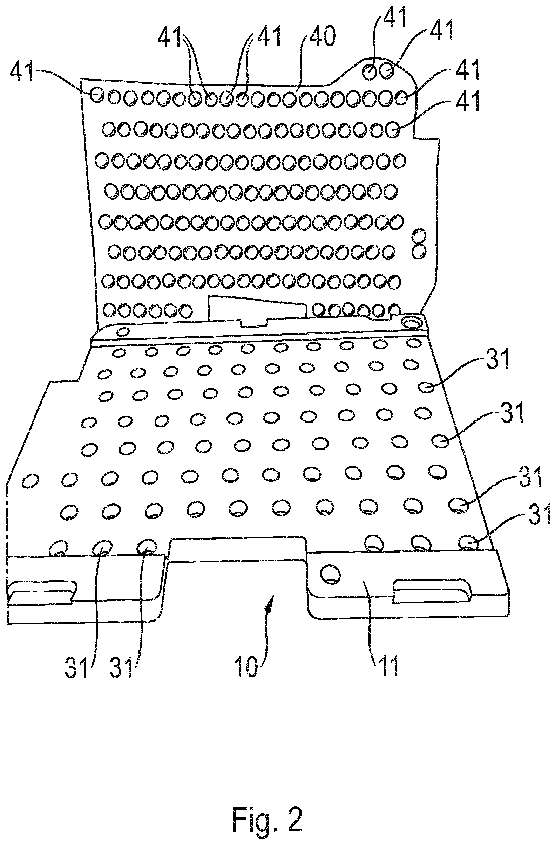

Fig. 2 zeigt beispielhaft das erste Seitenelement 11 sowie die Folie 40 des Prüfkörpers 10 der Fig. 1 nach einem Waschvorgang. Wie in Fig. 2 zu sehen ist, weist die Folie 40 eine Reihe von plastischen Verformungen 41 auf, welche jeweils ein Maß für den Wasserdruck und damit für die Waschleistung sind, mit denen die Folie 40 an der betreffenden Stelle beaufschlagt wurde. Wie weiterhin zu sehen ist, weisen die plastischen Verformungen 41 der Folie 40 abwechselnd in eine Richtung aus der Fig. 2 heraus und in eine Richtung in die Fig. 2 hinein, was dadurch verursacht wurde, dass die ersten Sackbohrungen 34 in axialer Verlängerung der zweiten Durchgangsbohrungen 35 angeordnet sind und umgekehrt und dass die Sackbohrungen 34, 36 jeweils abwechseln mit Durchgangsbohrungen 33, 35 in der ersten bzw. zweiten Oberfläche 21, 22 angeordnet sind.

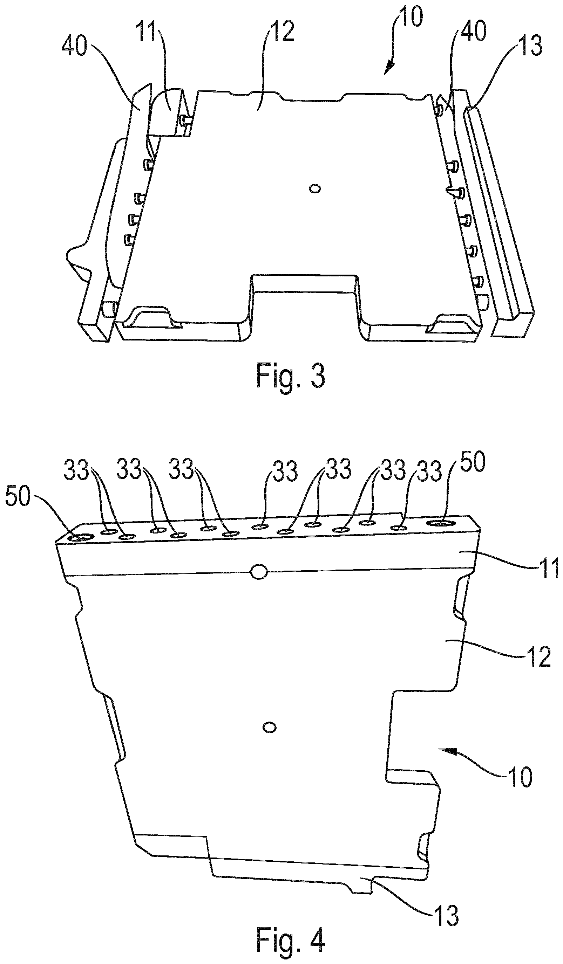

Fig. 3 zeigt beispielhaft eine weitere mögliche Ausbildungsform eines erfindungsgemäßen Prüfkörpers 10 zum Prüfen einer Waschleistung einer industriellen Waschmaschine (nicht dargestellt in Fig. 3). Wie zu sehen ist, besteht der Prüfkörper 10 der Fig. 3 aus einem ersten Seitenelement 11, einem zweiten Seitenelement 12 und einem dritten Seitenelement 13. Das erste Seitenelement 11 und das dritte Seitenelement 13 können dabei jeweils am zweiten Seitenelement 12 angeordnet werden, so dass die erste plane Oberfläche 21 des ersten Seitenelement 11 an einer zweiten planen Oberfläche 22 des zweiten Seitenelements 12 anliegt und ebenso eine dritte plane Oberfläche 23 des dritten Seitenelements 13 an einer weiteren zweiten planen Oberfläche 22 des zweiten Seitenelements 12 anliegt. Zwischen die erste plane Oberfläche 21 und die zweite plane Oberfläche 22 sowie zwischen die dritte plane Oberfläche 23 und die weitere zweite plane Oberfläche 22 kann jeweils eine Folie 40 eingelegt werden.

Fig. 4 zeigt den Prüfkörper 10 der Fig. 3 in einem Zustand, in dem alle drei Seitenelemente 11, 12, 13 miteinander verbunden sind. Zu sehen sind weiterhin die ersten Durchgangsbohrungen 31 im ersten Seitenelement sowie zwei Befestigungsbohrungen 50, über welche das erste Seitenelement 11 mittels Schrauben mit dem zweiten Seitenelement 12 verbunden werden kann.

### Bezugszeichen

- 10: Prüfkörper
- 11: erstes Seitenelement
- 12: zweites Seitenelement
- 13: drittes Seitenelement
- 21: erste plane Oberfläche
- 22: zweite planen Oberfläche
- 23: dritte plane Oberfläche
- 31: erste Bohrung
- 32: zweite Bohrung
- 33: erste Durchgangsbohrung
- 34: erste Sackbohrung
- 35: zweite Durchgangsbohrung
- 36: zweite Sackbohrung
- 40: Folie
- 41: plastische Verformung
- 50: Befestigungsbohrung

## Patentansprüche

1. Prüfkörper (10) zum Prüfen einer Waschleistung einer industriellen Waschmaschine, umfassend ein erstes Seitenelement (11) mit mindestens einer ersten planen Oberfläche (21) sowie ein zweites Seitenelement (12) mit mindestens einer zweiten planen Oberfläche (22), wobei das erste Seitenelement (11) mit dem zweiten Seitenelement (12) verbindbar ist, so dass die erste plane Oberfläche (21) an der zweiten planen Oberfläche (22) anliegt, wobei die erste plane Oberfläche (21) erste Bohrungen (31) aufweist und wobei die zweite plane Oberfläche (22) zweite Bohrungen (32) aufweist,
**dadurch gekennzeichnet, dass** die ersten Bohrungen (31) in einem verbundenen Zustand des ersten Seitenelements (11) mit dem zweiten Seitenelement (12) in axialer Verlängerung der zweiten Bohrungen (32) angeordnet sind und ass zwischen die erste plane Oberfläche (21) und die zweite plane Oberfläche (22) eine plastisch verformbare Folie (40) eingelegt ist.

2. Prüfkörper (10) nach Anspruch 1,
**dadurch gekennzeichnet, dass** die Folie (40) als metallische Folie (40) ausgebildet ist.

3. Prüfkörper (10) nach Anspruch 2,
**dadurch gekennzeichnet, dass** die Folie (40) als Aluminiumfolie (40) ausgebildet ist.

4. Prüfkörper (10) nach mindestens einem der Ansprüche 1 bis 3,
**dadurch gekennzeichnet, dass** die ersten Bohrungen (31) teilweise als erste Durchgangsbohrungen (33) und teilweise als erste Sackbohrungen (34) ausgebildet sind und dass die zweiten Bohrungen (32) teilweise als zweite Durchgangsbohrungen (35) und teilweise als zweite Sackbohrungen (36) ausgebildet sind.

5. Prüfkörper nach Anspruch 4,
**dadurch gekennzeichnet, dass** die ersten Sackbohrungen (34) in einem verbundenen Zustand des ersten Seitenelements (11) mit dem zweiten Seitenelement (12) in axialer Verlängerung der zweiten Durchgangsbohrungen (35) angeordnet sind und dass die zweiten Sackbohrungen (36) in einem verbundenen Zustand des ersten Seitenelements (11) mit dem zweiten Seitenelement (12) in axialer Verlängerung der ersten Durchgangsbohrungen (33) angeordnet sind.

6. Prüfkörper (10) nach mindestens einem der Ansprüche 1 bis 5,
**dadurch gekennzeichnet, dass** eine äußere Geometrie des Prüfkörpers (10) einer äußeren Geometrie eines von der Waschmaschine zu waschenden Werkstücks identisch entspricht.

7. Prüfkörper (10) nach Anspruch 6,
**dadurch gekennzeichnet, dass** der Prüfkörper (10) ein hydraulisches Schaltgerät eines Fahrzeuggetriebes nachbildet.

8. Prüfkörper (10) nach mindestens einem der Ansprüche 1 bis 7,
**dadurch gekennzeichnet, dass** der Prüfkörper (10) aus einem Metall besteht.

9. Prüfkörper (10) nach Anspruch 8,
**dadurch gekennzeichnet, dass** der Prüfkörper (10) aus Aluminium besteht.

10. Prüfkörper (10) nach mindestens einem der Ansprüche 1 bis 9,
**dadurch gekennzeichnet, dass** der Prüfkörper (10) eine Vielzahl von Seitenelementen (11, 12, 13) mit jeweils mindestens einer planen Oberfläche (21, 22, 23) umfasst.

11. Prüfkörper (10) nach Anspruch 10,
**dadurch gekennzeichnet, dass** zwischen je zwei aneinander anliegende plane Oberflächen (21, 22, 23) eine Folie (40) eingelegt ist.
